# EUROPEAN PATENT SPECIFICATION

(11) **EP 0 463 897 B1**
(45) Date of publication and mention of the grant of the patent: **20.03.1996**
(21) Application number: 91401384.2
(22) Date of filing: 29.05.1991
(51) Int. Cl.: B01D 29/085

(54) **Filter membrane support and funnel for filtering liquids for microbiological analysis thereof**
Filtermembranbauträger und Trichter zum Filtrieren von Flüssigkeiten zur mikrobiologischen Analyse
Support de membrane filtrante et son entonnoir pour la filtration de liquides en vue de leur analyse microbiologique

(30) Priority: 28.06.1990 FR 9008171
(43) Date of publication of application: 02.01.1992
(73) Proprietor: MILLIPORE S.A., F-67120 Molsheim (FR)
(72) Inventor: Lemonnier, Jean, F-78110 Le Vesinet (FR)
(74) Representative: Rinuy, Santarelli

(56) References cited:
- DE-C- 3 711 735
- GB-A- 583 609
- GB-A- 2 144 221
- US-A- 2 367 794
- US-A- 4 160 535

## Description

The present invention concerns filtering samples of liquids such as drinks, medicines and cosmetics for microbiological analysis thereof.

Bacteria, mould and especially yeast are a permanent threat to the quality, stability and taste of some liquids, including drinks. They are found practically everywhere, in the raw materials, on the surfaces of machines and in the air.

Mould cannot grow in non-alcoholic drinks once the manufacture is completed, but they can prosper in water and in sugar syrups, in which they cause strong smells and a disagreeable taste. High bacteria counts in the finished product indicate non-hygienic packaging that needs to be modified. The characteristic aspects of contamination by yeast are a white deposit at the bottom of the bottle and changes in taste and smell.

The best way to prevent the development of contamination, which represents a risk to the consumer and to the quality of the product, is to adopt a programme of regular sampling and testing at key points in the production system. A systematically executed programme of sampling and analyses enables the manufacturer to contain and remedy any such contamination at source before it develops into a major problem.

There are currently available many types of single-use or reusable apparatus for carrying out this type of sampling and analysis, with a greater or lesser degree of ease of use.

The method most commonly used at present and recommended by French and US standards entails clamping a 47 mm diameter circular filter membrane with a pore size of 0.45 µm between the smooth edges of a funnel and a circular support having a porous central surface, placing this filter system on a vacuum manifold or conical flask, pouring the sample into the funnel and vacuum filtering it to recover any microorganisms on the membrane.

After filtration the funnel is rinsed with distilled water or a phosphate buffer to recover all of the microorganisms and to eliminate from the filter membrane itself any bacteriostatic agents which could falsify the results.

The filter membrane is then removed, placed on a culture medium specific to the microorganism looked for and allowed to incubate. After a specific incubation period colonies form on the surface of the filter that are easy to count and identify.

For instance, DE-C-3,711,735, published in 1988, discloses a device for filtering liquids wherein the membrane is supported by a filter-plate within a funnel, provided with an axial slit so as to provide a permanent easy access to the membrane.

A major difficulty of this known method is manipulating the extremely fragile filter membrane, especially when detaching it from the support after filtration. When it is wet it is in perfect contact with the support, whose peripheral surface is generally coated with polytetrafluoroethylene to reduce the adhesion of the membrane to it. Even so, it is still difficult to detach it from the support and especially to grasp it by its edge using tweezers without damaging it or deforming it during handling.

An object of the present invention is to improve the apparatus used to support the filter membrane and to receive the sample to be analysed, with a view to facilitating handling of the membrane by the operator.

It consists in using as the support for the circular filter membrane a two-part support comprising a central part and a peripheral part, with means providing access to the edge of the membrane as a result of axial tilting or displacement of one part of the support relative to the other.

Said means comprise, according to the invention, a plunger tilting the central part of the membrane support in the upstream direction (in the sense of the direction of fluid flow).

The central part of the membrane support is preferably a circular drainage part made from a perforated or sintered material and whose diameter is less than that of the filter membrane.

The peripheral part of the membrane support preferably has a roughened upper surface obtained by appropriate surface treatment such as sand blasting or shot blasting or the like: the peripheral surface of the filter membrane mates with this roughened surface during vacuum filtering to provide a seal while the reliefs of this roughened surface break the vacuum, without any manual opening of any valve, immediately the peripheral edges of the membrane are no longer clamped to this surface.

Provision may be made for movement of the upper surface of the central part of the membrane support in the downstream direction relative to the parallel upper surface of the peripheral part of the support, to enable the filter membrane to deform slightly during vacuum filtering to produce a convex lower surface favouring good contact when deposited on a culture medium.

Another object of the present invention is a funnel adapted to cooperate with the support as previously defined.

This funnel is adapted to receive the sample of liquid to be filtered on the membrane and is characterised by a frustoconical right cross-section whose smaller base, situated at its lower end, has a flexible sealing lip extending radially towards the axis of the funnel and adapted to grip the peripheral part of the membrane and is also characterised by means for snap-fastening the funnel on said support.

The snap-fastening means is preferably a device for engaging a locking ring disposed inside a cylindrical protective skirt extending the narrower bottom end of the funnel, on the side opposite the frustoconical part and cooperating with an external circular groove on the support.

The outside diameter of this cylindrical protective skirt is less than the inside diameter of the smaller base of the frustoconical part, to enable funnels to be stacked one inside the other without compressing their frustoconical part.

Such stacking without compression enables them to be loaded in vertical stacks into an automatic dispenser.

Each funnel may be provided at its larger base, situated at its open upper end, with a stiffener ring facilitating handling it and dispensing it from a dispensing machine.

The open lower end of the funnel enables it to be disposed around an ultra-violet lamp which maintains the interior of the funnel sterile immediately before use.

The inside walls of the frustoconical part of the funnel are preferably polished and the upper surface of the flexible sealing lip is preferably roughened so as to modify the surface tension of the liquid and to facilitate flow of the sample to be analysed.

The present invention will now be described with reference to the appended drawings in which:
- figure 1 shows a view in elevation and partly in cross-section of one specific embodiment of the support in accordance with the invention;
- figure 2 shows a front view, partly in cross-section of the same support as in figure 1, fitted with its funnel;
- figure 3 shows the same support as figures 1 and 2 with the two parts separated by a plunger;
- figure 4 shows the filter membrane resting on the two parts of the support in accordance with the invention;
- figure 5 shows the filter membrane deposited on a culture medium;
- figure 6 shows a battery of filter devices with supports in accordance with the invention disposed on a vacuum manifold;

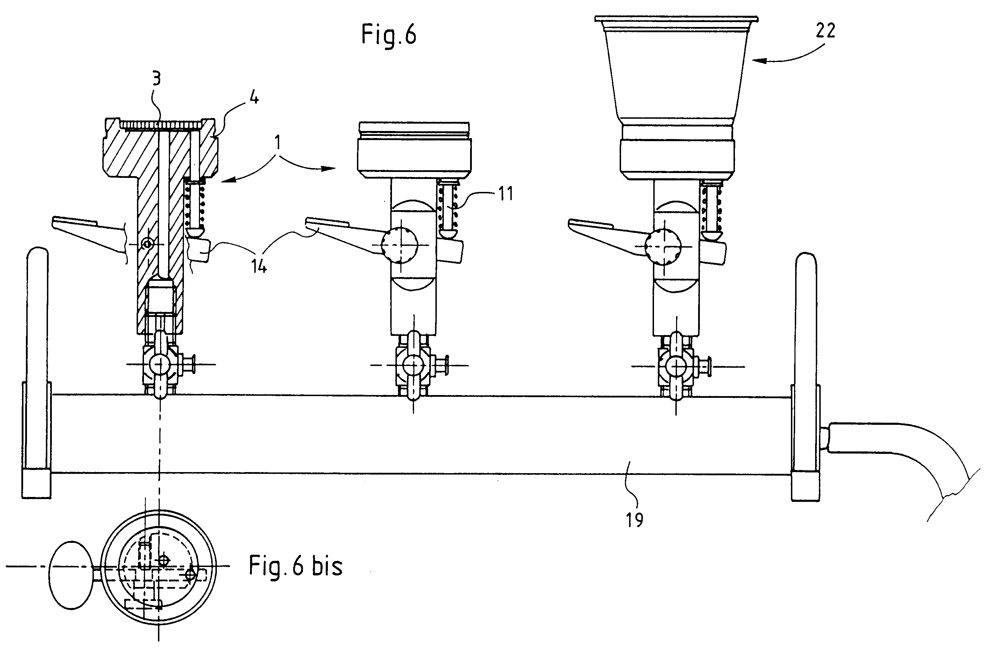

- figure 6 bis is a plan view of the support;

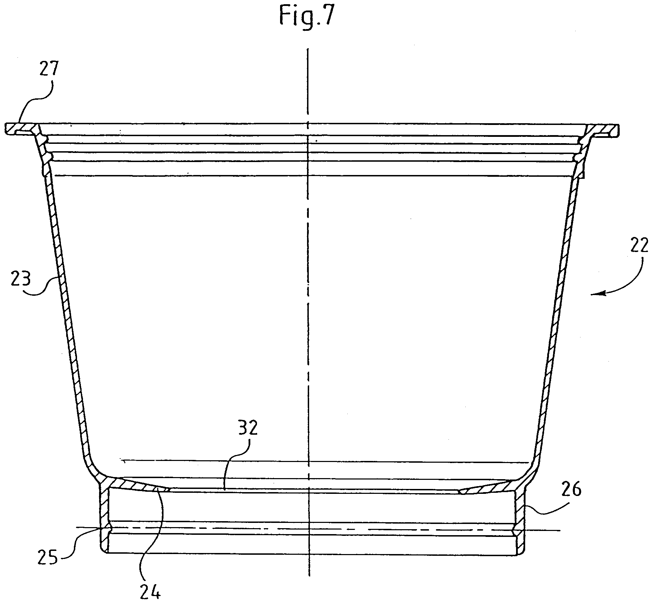

- figure 7 shows a funnel in accordance with the invention in cross-section;

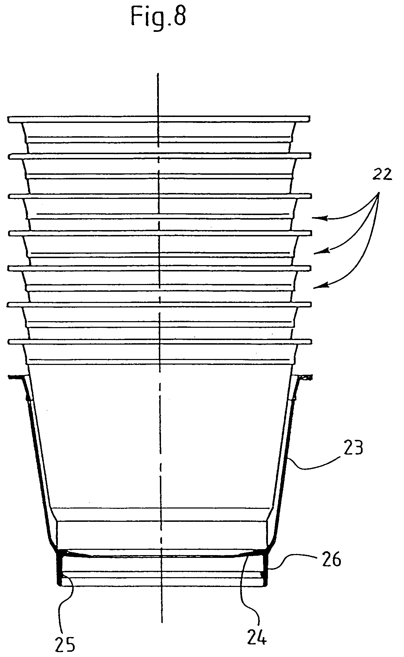

- figure 8 shows a series of funnels as in figure 7 stacked by nesting them inside each other;

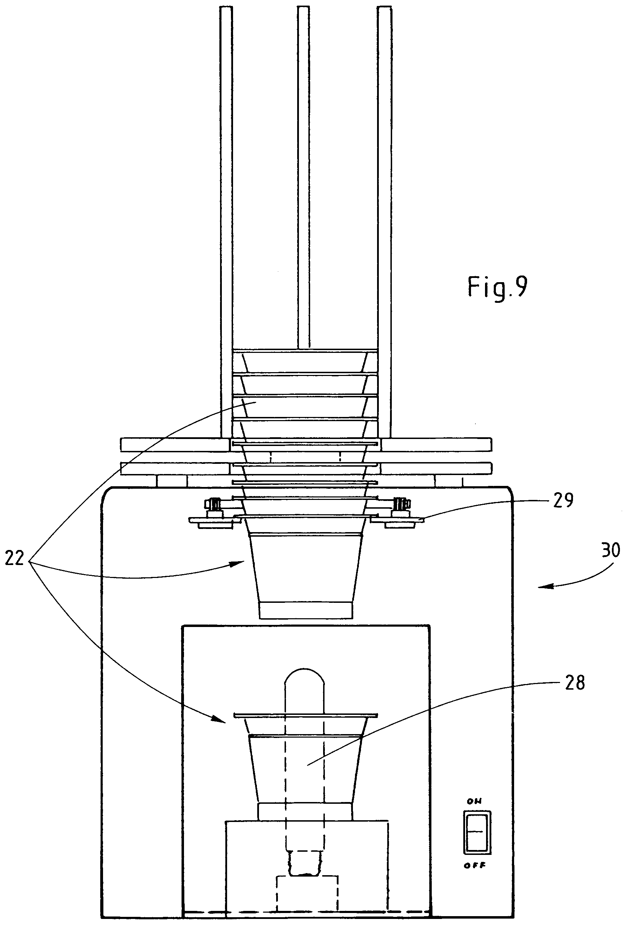

- figure 9 shows a dispenser for funnels as in figure 7; and

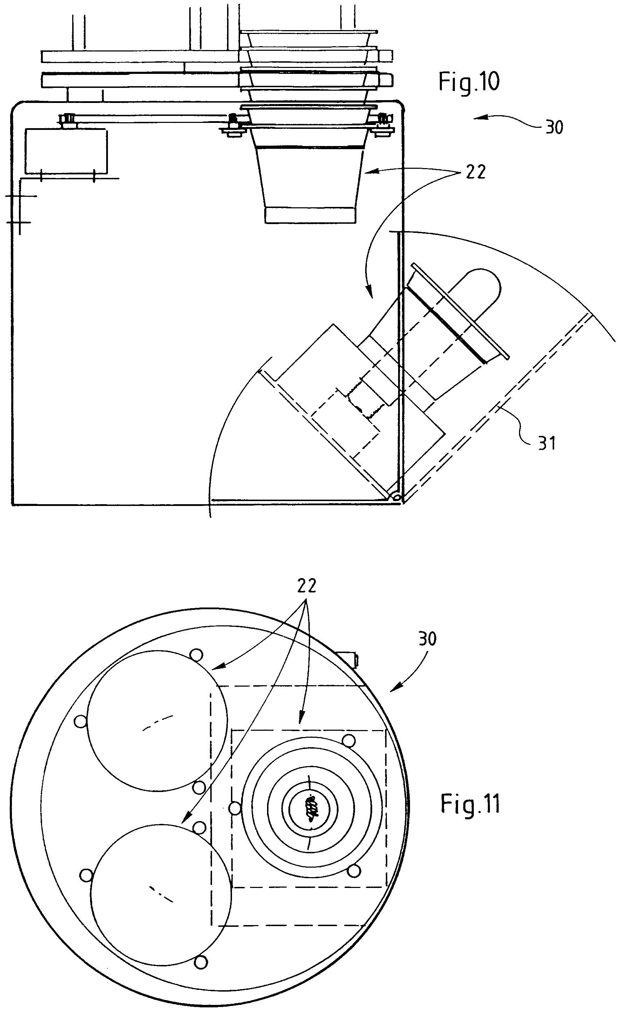

- figures 10 and 11 are respectively a bottom view and a top view of the dispenser from figure 9.

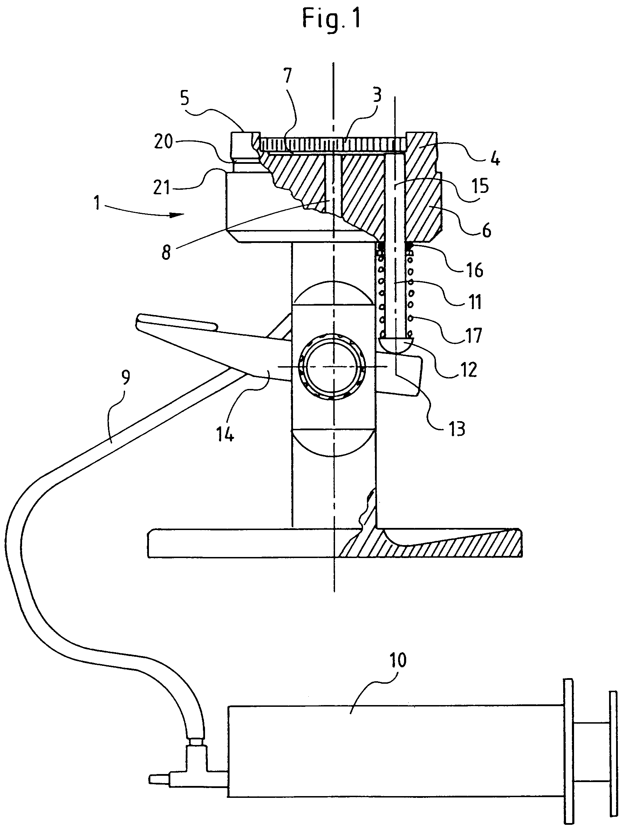

The support (1) in accordance with the invention for a circular filter membrane (2) is shown in figures 1 through 4 and 6.

The support comprises a vertical axis pedestal on which is disposed a circular plate (6) with a central recess (7) and an axial bore (8) connected to an evacuation system comprising a flexible pipe (9) and a two-way syringe (10).

The support includes a circular central part (3) and a ring-shaped peripheral part (4) surrounding the central part (3), both supporting the filter membrane (2).

The central part (3) of the support is in the form of a removable plastics material, metal or glass disk which is made porous to enable the liquid sample which has passed through the membrane (2) to drain away.

This central support part (3) is inside the peripheral support part (4), the upper surfaces of each of the two support parts being in different but parallel planes so that the central part is slightly downstream of the peripheral part relative to the direction of flow of the liquid to be analysed.

The upper surface (5) of the peripheral support part (4) on which the edges of the filter membrane (2) rest is given an appropriate surface treatment to roughen it.

The support also incorporates a finger-like plunger (11) with its axis parallel to that of the support (1) and with one end (12) resting on the arm (13) of a lever (14) and its other end (15) flush with the lower surface of the central support part (3), near the circumference of the latter, as shown in figure 1.

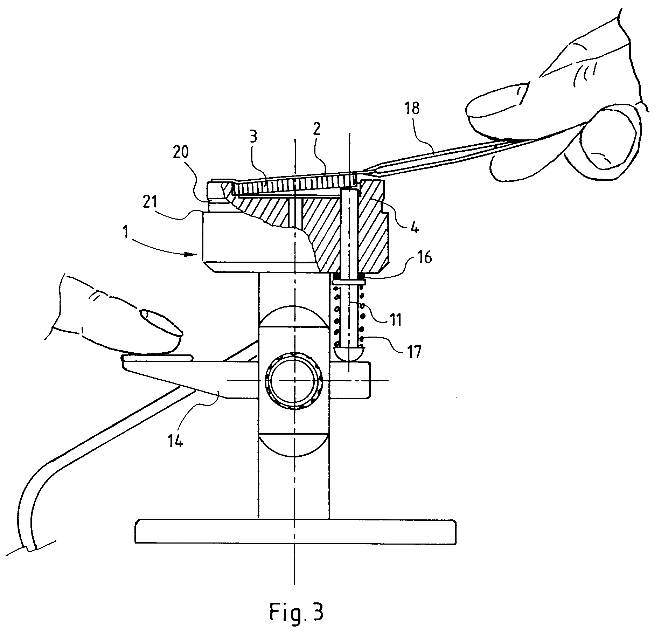

The plunger (11) can be moved axially to separate the central support part (3) from the peripheral support part (4) with a tilting motion, as shown in figure 3.

The plunger is fitted with an external seal (16) and is normally held in the rest position shown in figure 1, a coil spring (17) urging it downwards at all times so that the upper surfaces of the central and peripheral support parts (3 and 4) are parallel.

Depressing the arm of the lever (14) opposite that on which the end (12) of the plunger (11) rests causes axial upward movement of the plunger to tilt the central part (3) and release the edge of the filter membrane (2), which can then be easily grasped with tweezers (18) as shown in figure 3.

The pivot pin of the lever (14) is screwed to the pedestal and the lever is easily removed for proper cleaning of the support (1).

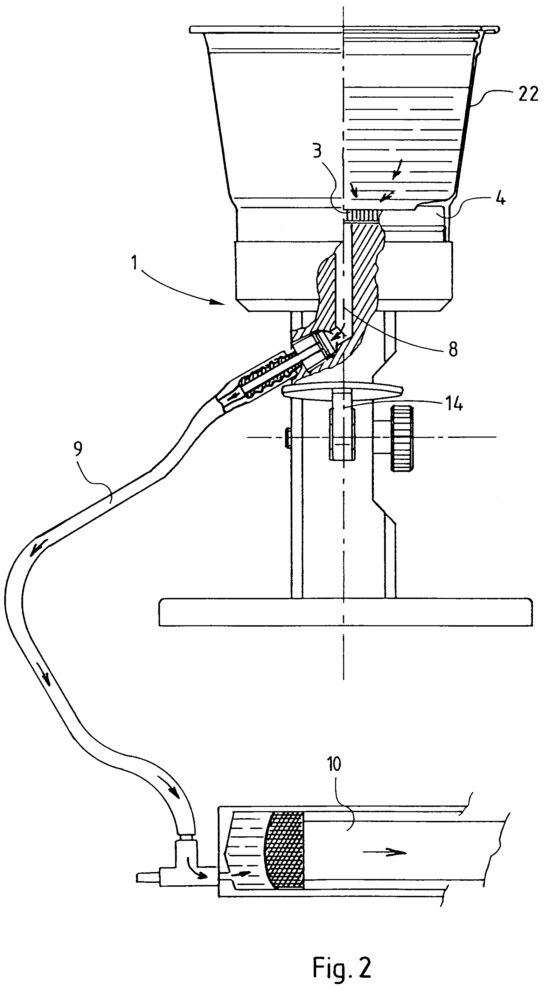

The axial bore (8) may be connected either to the flexible pipe (9) and the syringe (10) as shown in figures 1 and 2 or to a laboratory vacuum manifold (19) as shown in figure 6.

The circular plate (6) to which the peripheral support part (4) is attached (in this embodiment they are in one piece) incorporates an external circular groove (20) and a lip (21) in planes parallel to the upper surfaces of the central and peripheral support parts (3 and 4) and downstream of the latter. Their role will be explained later.

The funnel (22) in accordance with the invention is shown in figures 2 and 6 through 11. It will be described with particular reference to figure 7.

The funnel is designed for filtering a liquid sample on a filter membrane (2) disposed on a support (1) and has a frustoconical right cross-section (23) in which the smaller base, at the lower end, has a flexible sealing lip (24) extending radially towards the axis of the funnel and adapted to immobilise the edges of the filter membrane (2) on the peripheral part of the support.

The inside diameter (32) of the flexible sealing lip (24) defines an axial opening with a diameter that is preferably at least 35 mm to enable the insertion of a standard ultra-violet lamp for maintaining sterile conditions inside the funnel.

Although the inside walls of the funnel are smooth the upper surface of the sealing lip (24) is roughened to facilitate the flow of the liquid to be analysed.

The funnel (22) is also provided with a device for fixing it to the support (1).

This device is a snap-fastening comprising a locking ring (25) in a plane perpendicular to the funnel axis and inside a cylindrical protective skirt (26) extending the narrower bottom end of the funnel away from the frustoconical part (23) and adapted to cooperate with the external circular groove (20) on the support, the end of the skirt being in contact with the rim (21).

The outside diameter of the skirt (26) is less than the inside diameter of the smaller base of the frustoconical part (23) of the funnel (22) to enable funnels to be stacked inside each other nesting fashion without crushing their frustoconical parts (23), as shown in figure 8.

The open upper end of the funnel, defined by the larger base of the frustoconical part (23), preferably incorporates an external stiffener ring ( 27 ) which facilitates handling the funnel and retaining it in a dispenser.

This structure of the funnels (22) in accordance with the invention enables them to be stacked up nested inside each other without crushing them and also enables them to be dispensed one by one by gravity, around an ultra-violet lamp (28) adapted to maintain sterile conditions, by means of a cam device (29) in a funnel dispenser (30) with a tilting door (31) as shown in figures 9 through 11.

The main advantage of a filter device using a support and funnel in accordance with the invention is the easy access to the edges of the filter membrane after filtration (see figure 3).

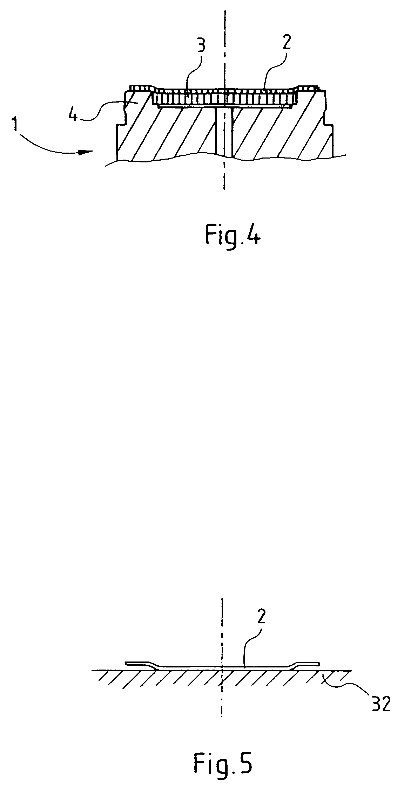

The offset between the upper surfaces of the central and peripheral support parts (3 and 4) allows deformation of the edges of the filter membrane (2) as shown in figure 4, which facilitates contact between the convex central part of the membrane and the culture medium (32), as shown in figure 5.

Finally, the fact that the upper surface (5) of the peripheral part (4) of the support is roughened means that the vacuum is broken as soon as the funnel is released from the support, without requiring any separate operation.

All these advantages mean that the device in accordance with the present invention can facilitate the microbiological analysis of liquid samples and in particular make it easier to handle a filter membrane which adheres strongly to its support and is particularly difficult to detach when wet, for transfer onto a culture medium, with a view to detecting any microorganisms collected on the membrane.

## Claims

1. Support (1) for circular filter membranes (2) comprising a central support part (3), a peripheral support part (4) both supporting the filter membrane (2), and means for separating one support part relative to the other by axial displacement or tilting and thus cancelling the support of the peripheral part of the membrane by the peripheral support part (4) characterized in that the means for separating the two support parts (3 and 4) is a finger-like plunger (11) with its axis perpendicular to the upper surfaces of the central and peripheral support parts (3 and 4), located near the circumference of the central support part (3) arid adapted to be moved axially to separate the central part (3) from the peripheral part (4) of the support.

2. Support according to claim 1 characterised in that the plunger (11) is fitted with an external seal and is urged at all times by a spring (17) into a position in which the upper surfaces of the central and peripheral support parts (3 and 4) support the filter membrane (2) and axial displacement is imparted to the plunger by a lever (14) acting against the spring (17).

3. Support according to any one of the preceding claims characterised in that it comprises an external snap-fastener circular groove (20) in a plane parallel to and downstream of the upper surfaces of the support parts (3 and 4).

4. Support according to any one of the preceding claims characterised in that the upper surface of the peripheral support part (4) is roughened.

5. Funnel (22) for filtering a liquid sample on a filter membrane (2) disposed on the support (1) according to any one of the preceding claims characterised on the one hand by a frustoconical part (23) whose smaller base at its lower end has a flexible sealing lip (24) extending radially towards the axis of the funnel and designed to immobilise the peripheral part of the filter membrane (2) on the peripheral part of the support (4) and on the other hand by means (25, 26) for snap-fastening the funnel (22) on said support (1).

6. Funnel according to claim 5 characterised in that said means for snap-fastening the funnel on said support comprise a locking ring (25) disposed inside a cylindrical protection skirt (26) extending the narrower bottom end of the funnel (22) away from the frustoconical part (23) and cooperating with an external circular groove (20) on the support (1).

7. Funnel according to claim 5 or 6 characterised in that the inside diameter (32) of the flexible sealing lip (24) defines an axial opening with a diameter enabling entry of a standard ultra-violet lamp for maintaining sterile conditions inside said funnel.

8. Funnel according to any one of claims 5 to 7 characterised in that its wider open upper end incorporates a stiffener ring (27) for handling it and retaining it in a dispenser.

9. Funnel according to claim 6 characterised in that the outside diameter of the cylindrical protective skirt (26) is less than the inside diameter of the smaller base of the frustoconical part (23) to enable stacking of funnels without crushing the frustoconical parts (23).

## Patentansprüche

1. Halter (1) für kreisförmige Filtermembranen (2), mit einem Mittenhalteteil (3), einem Umfangshalteteil (4), die beide die Filtermembran (2) halten, und mit einer Einrichtung zum Separieren eines Halteteils relativ vom anderen durch axiales Verstellen oder Kippen und somit Aufheben der Halterung des Umfangsteils der Membran durch das Umfangshalteteil (4), **dadurch gekennzeichnet**, daß die Einrichtung zum Separieren der zwei Halteteile (3 und 4) aus einem fingerähnlichen Stempel (11) besteht, dessen Achse senkrecht zu den oberen Flächen des Mitten- und des Umfangshalteteiles (3 und 4) verläuft, der nahe dem Umfang des Mittenhalteteils (3) angeordnet und so ausgelegt ist, daß er axial bewegt werden kann, um das Mittenteil (3) vom Umfangsteil (4) des Halters zu trennen.

2. Halter nach Anspruch 1, dadurch gekennzeichnet, daß der Stempel (11) mit einer äußeren Dichtung versehen ist und durch eine Feder (17) immer in eine Position gedrückt wird, in der die oberen Flächen des Mitten- und des Umfangshalteteiles (3 und 4) die Filtermembran (2) halten, und daß eine axiale Verstellung auf den Stempel durch einen Hebel (14) übertragen wird, der gegen die Feder (17) wirkt.

3. Halter nach einem der vorhergehenden Ansprüche, dadurch gekennzeichnet, daß er eine äußere kreisförmige Schnappbefestigungsnut (20) in einer Ebene parallel zu den und stromabwärts der oberen Flächen der Halteteile (3 und 4) enthält.

4. Halter nach einem der vorhergehenden Ansprüche, dadurch gekennzeichnet, daß die obere Fläche des Umfangshalteteils (4) aufgerauht ist.

5. Trichter (22) zum Filtern eine Flüssigkeitsprobe auf einer Filtermembran (2), die auf dem Halter (1) nach einem der vorhergehenden Ansprüche liegt, gekennzeichnet einerseits durch ein kegelstumpfförmiges Teil (23) dessen kleinere Basis an seinem unteren Ende eine flexible Dichtlippe (24) aufweist, die radial zur Achse des Trichters hin verläuft und zum Festlegen des Umfangsteils der Filtermembran (2) am Umfangsteil (4) des Halters gestaltet ist, und andererseits durch Einrichtungen (25, 26) zum Schnappbefestigen des Trichters (22) an dem Halter (1).

6. Trichter nach Anspruch 5, dadurch gekennzeichnet, daß die Einrichtungen zum Schnappbefestigen des Trichters an dem Halter einen Sicherungsring (25) enthalten, der innerhalb einer zylindrischen Schutzeinfassung (26) liegt, die sich am schmäleren Bodenende des Trichters (22) vom kegelstumpfförmigen Teil (23) weg erstreckt und mit einer äußeren kreisförmigen Nut (20) am Halter (1) zusammenwirkt.

7. Trichter nach Anspruch 5 oder 6, dadurch gekennzeichnet, daß der Innendurchmesser (32) der flexiblen Dichtlippe (24) eine axiale Öffnung mit einem Durchmesser bestimmt, der das Einführen einer Standard-Ultraviolettlampe zum Erhalten steriler Bedingungen innerhalb des Trichters ermöglicht.

8. Trichter nach einem der Ansprüche 5 bis 7, dadurch gekennzeichnet, daß sein weiteres, geöffnetes oberes Ende einen Versteifungsring (27) enthält, um ihn handzuhaben und ihn in einem Spender zurückzuhalten.

9. Trichter nach Anspruch 6, dadurch gekennzeichnet, daß der Außendurchmesser der zylindrischen Schutzeinfassung (26) kleiner als der Innendurchmesser der kleineren Basis des kegelstumpfförmigen Teils (23) ist, um ein Stapeln von Trichtern ohne Zerbrechen der kegelstumpfförmigen Teile (23) zu ermöglichen.

## Revendications

1. Support (1) pour membranes filtrantes circulaires (2) comportant une partie centrale (3) de support, une partie périphérique (4) de support supportant toutes deux la membrane filtrante (2), et des moyens pour séparer une partie de support de l'autre partie de support par un déplacement axial ou une inclinaison et pour supprimer ainsi le support de la partie périphérique de la membrane par la partie périphérique (4) de support, caractérisé en ce que les moyens destinés à séparer les deux parties (3 et 4) de support comprennent un plongeur (11) analogue à un doigt dont l'axe est perpendiculaire aux surfaces supérieures des parties centrale et périphérique (3 et 4) de support, placé à proximité de la circonférence de la partie centrale (3) de support et conçu pour se déplacer axialement afin de séparer la partie centrale (3) de la partie périphérique (4) du support.

2. Support selon la revendication 1, caractérisé en ce que le plongeur (11) est pourvu d'un joint extérieur d'étanchéité et est constamment rappelé par un ressort (17) dans une position dans laquelle les surfaces supérieures des parties centrale et périphérique (3 et 4) de support supportent la membrane filtrante (2) et un déplacement axial est communiqué au plongeur par un levier (14) agissant-contre le ressort (17).

3. Support selon l'une quelconque des revendications précédentes, caractérisé en ce qu'il comporte une gorge circulaire extérieure (20) pour organe de fixation encliqueté, située dans un plan parallèle aux surfaces supérieures des parties (3 et 4) de support en aval de ces surfaces.

4. Support selon l'une quelconque des revendications précédentes, caractérisé en ce que la surface supérieure de la partie périphérique (4) de support est rendue rugueuse.

5. Entonnoir (22) pour filtrer un échantillon de liquide sur une membrane filtrante (2) disposée sur le support (1) selon l'une quelconque des revendications précédentes, caractérisé d'une part par une partie tronconique (23) dont la petite base, à son extrémité inférieure, comporte une lèvre flexible (24) d'étanchéité s'étendant radialement vers l'axe de l'entonnoir et conçue pour immobiliser la partie périphérique de la membrane filtrante (2) sur la partie périphérique du support (4) et, d'autre part, par des moyens (25, 26) pour fixer par encliquetage l'entonnoir (22) sur ledit support (1).

6. Entonnoir selon la revendication 5,caractérisé en ce que lesdits moyens pour fixer par encliquetage l'entonnoir sur ledit support comprennent un anneau (25) de blocage disposé à l'intérieur d'une jupe cylindrique (26) de protection prolongeant l' extrémité inférieure plus étroite de l'entonnoir (22) à l'écart de la partie tronconique (23) et coopérant avec une gorge circulaire extérieure (20) située sur le support (1).

7. Entonnoir selon la revendication 5 ou 6, caractérisé en ce que le diamètre intérieur (32) de la lèvre flexible (24) d'étanchéité définit une ouverture axiale d'un diamètre permettant l'entrée d'une lampe normalisée à ultraviolets pour maintenir des conditions stériles à l'intérieur dudit entonnoir.

8. Entonnoir selon l'une quelconque des revendications 5 à 7, caractérisé en ce que son extrémité supérieure ouverte plus large comprend un anneau raidisseur (27) pour sa manipulation et sa retenue dans un distributeur.

9. Entonnoir selon la revendication 6, caractérisé en ce que le diamètre extérieur de la jupe cylindrique (26) de protection est inférieur au diamètre intérieur de la petite base de la partie tronconique (23) pour permettre l'empilage d'entonnoirs sans écrasement des parties tronconiques (23).
